# EUROPEAN PATENT APPLICATION

(11) **EP 0 725 280 A1**
(43) Date of publication of application: **07.08.1996**
(21) Application number: 95101376.2
(22) Date of filing: 01.02.1995
(51) Int. Cl.: G01P 1/04

(54) **Hub unit with pulser ring**

(71) Applicant: Samtech Corporation, Kashiwara-shi, Osaka (JP)
(72) Inventor: Nomo, Izuho, c/o Samtech Corporation, Kashiwara-shi, Osaka (JP); Murakami, Kyozi, c/o Samtech corporation, Kashiwara-shi, Osaka (JP)
(74) Representative: Glawe, Delfs, Moll & Partner

(57) **Abstract**

A hub unit with a pulser ring integrally formed thereon is proposed. It comprises an upper boss, a flange and a lower boss. The protrusions for speed detection are formed integrally on the outer periphery of the lower boss of the hub unit body. This will eliminate the steps of forming the ring separately and coupling it with the hub unit body. Thus, it is easy to manufacture and has high strength and resistance to shock.

## Description

This invention relates to a hub unit with a pulser ring which is used in a rotation speed detector and a rotation position detector.

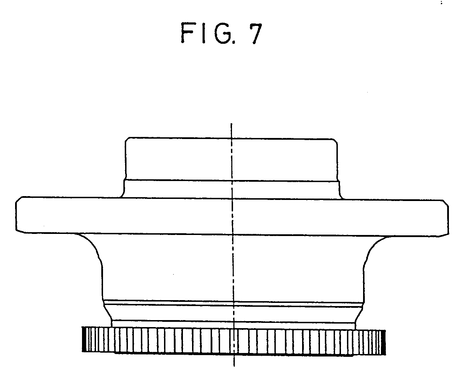

A conventional hub unit of this type as shown in Fig. 7 comprises a hub and a ring which is formed on its outer periphery with protrusions for speed detection. After separately forming the hub and the ring, the ring is fit on the hub.

Since these two parts are formed by cutting and then fitted together, it is extremely troublesome and expensive to manufacture.

Moreover, because the parts are formed by cutting, there is a problem of variation in dimension. This will cause a loose coupling, or the ring might crack while it is press-fit.

It is an object of the present invention to provide a hub unit with a pulser ring in which the protrusions are integrally formed by plastic deformation on the outer periphery of the lower boss of the hub unit.

According to the present invention, there is provided a hub unit with a pulser ring integrally formed thereon, the hub unit comprising a body formed thereon with a plurality of teeth for speed detection, characterized in that the hub unit is integrally formed by plastic deformation.

With this arrangement, the protrusions for speed detection are formed integrally on the outer periphery of the lower boss. This will eliminate the steps of forming the ring separately and coupling it with the hub unit body.

The hub unit with a pulser ring according to this invention is easy to manufacture. Also, since it is formed integrally, it has high strength and resistance to shock. It can be manufactured with low cost by cutting the manufacturing steps.

Other features and objects of the present invention will become apparent from the following description made with reference to the accompanying drawings, in which:
Fig. 1 is a view showing the material for hub unit;
Figs. 2-5 are sectional views showing the step of manufacturing the hub unit;
Fig. 6 is a perspective view of a hub unit with a pulser ring according to the present invention; and
Fig. 7 shows a conventional hub unit.

Now we shall describe the embodiment with reference to the drawing.

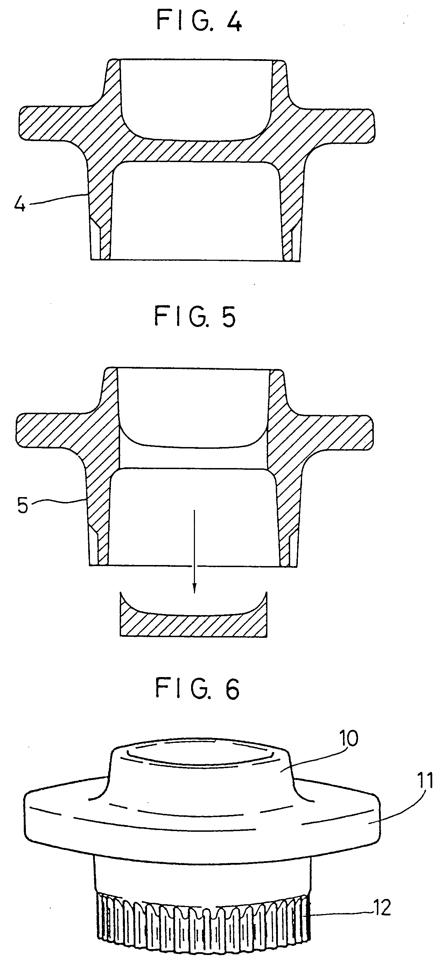

In Fig. 6, the hub unit with a pulser ring according to the present invention has an upper boss 10, a flange 11 and a lower boss 12 and is integrally formed by plastic deformation. Protrusions or teeth 14 formed on the lower boss 12 serve to produce pulses.

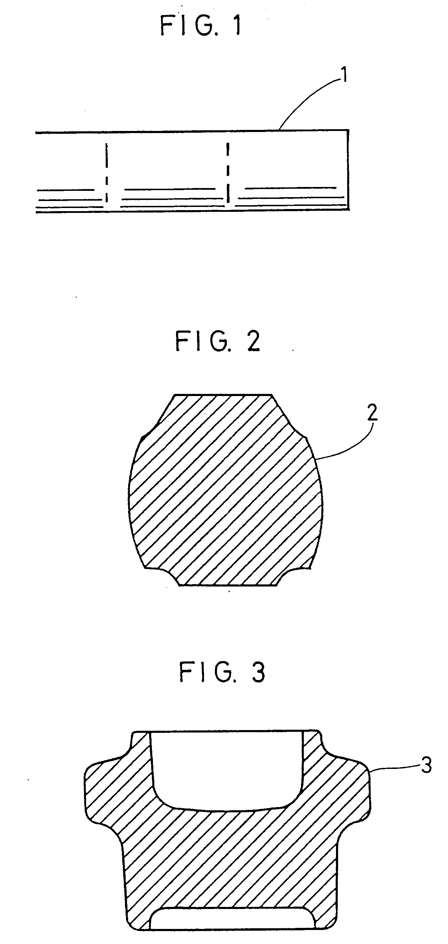

We will now describe the steps for manufacturing the hub unit according to the present invention with reference to Figs. 1-6.

A rod-shaped material is cut to a desired length to obtain a cylindrical material or billet 1 (Fig. 1). The billet is heated to a temperature suitable for plastic forming (hot or warm forging in the embodiment). The billet 1 is not limited to a cylindrical shape but may be of any other shape according to the intended shape of the final product.

Then, the billet 1 is deformed (or swaged) in a hot or warm forging step to provide a preform 2 (Fig. 2).

The preform 2 is plastic-formed (rough forming) into a forging 3 having no speed detecting teeth in a toothless forging die (Fig. 3).

The forging 3 is then placed in a die having a toothed portion and subjected to plastic forming to provide a forging 4 having a toothed `portion on the lower boss (Fig. 4).

A shaft hole is formed in the forging 4 by piercing to provide a forging 5 (Fig. 5).

Finally, the forging 5 is subjected to coining to make uniform the shape of the toothed portion. The hub unit thus obtained is shown in Fig. 6. The coining step may be carried out in a hot, warm or cold environment. This step is necessary to obtain a desired accuracy for the teeth. But it may be omitted to reduce the cost if a desirable accuracy is attained without coining.

## Claims

1. A hub unit with a pulser ring integrally formed thereon, said hub unit comprising a body formed thereon with a plurality of teeth for speed detection,
characterized in that said hub unit is integrally formed by plastic deformation.
